# EUROPÄISCHE PATENTSCHRIFT

(11) **EP 2 679 803 B1**
(45) Veröffentlichungstag und Bekanntmachung des Hinweises auf die Patenterteilung: **01.02.2017**
(21) Anmeldenummer: 12004850.9
(22) Anmeldetag: 28.06.2012
(51) Int. Cl.: F03D 1/06

(54) **WINDENERGIEANLAGENROTORBLATT MIT EINER DICKEN PROFILHINTERKANTE**
WIND TURBINE ROTOR BLADE WITH A THICK PROFILE TRAILING EDGE
PALE DE ROTOR D'ÉOLIENNE DOTÉE D'UN BORD DE FUITE À PROFIL ÉPAIS

(43) Veröffentlichungstag der Anmeldung: 01.01.2014
(73) Patentinhaber: Nordex Energy GmbH, 22419 Hamburg (DE)
(72) Erfinder: Doosttalab, Mehdi, 22850 Norderstedt (DE)
(74) Vertreter: Hauck Patentanwaltspartnerschaft mbB

(56) Entgegenhaltungen:
- EP-A2- 2 169 216
- WO-A1-2011/068405
- US-A1- 2011 211 954

## Beschreibung

Die Erfindung betrifft ein Windenergieanlagenrotorblatt mit einer Längsachse, einer Blattwurzel, einer Blattspitze, einer Druckseite, einer Saugseite und einem aerodynamischen Profil, das in einem Längsabschnitt des Rotorblatts eine Profilsehne und eine dicke Profilhinterkante aufweist.

Bei Windenergieanlagenrotorblättern mit einer sogenannten dicken Hinterkante ist die Hinterkante des Rotorblatts anders als bei einem dünn auslaufenden Profil nicht von einer Linie, sondern von einer rückwärtigen Fläche gebildet. Betrachtet man das Rotorblatt im Querschnitt, also das Profil, laufen Druckseite und Saugseite an ihren hinteren Enden nicht in einem Punkt zusammen, sondern die hinteren Enden von Druck- und Saugseite weisen einen Abstand voneinander auf, der von einer im Wesentlichen senkrecht zur Profilsehne stehenden Fläche überbrückt wird. Unter aerodynamischen Gesichtspunkten ist eine dünn auslaufende Hinterkante im Allgemeinen von Vorteil, weil die an Druck- und Saugseite vorbeiströmende Luft an der Hinterkante glatt abströmen kann, ohne dass es notwendigerweise zu stärkeren Verwirbelungen kommt. In der Vergangenheit ist daher versucht worden, die Hinterkanten von Rotorblättern so dünn wie möglich auszubilden, wobei eine fertigungstechnische Grenze im Bereich von ungefähr 1 mm bis 3 mm liegt.

Es hat sich jedoch herausgestellt, dass die Verwendung dickerer Hinterkanten insbesondere unter strukturellen Gesichtspunkten im Blattwurzelbereich vorteilhaft sein kann. So ist es möglich, das Rotorblatt leichter zu gestalten und trotzdem eine aus Festigkeitsgesichtspunkten erforderliche Profilhöhe zu verwirklichen. Bei Rotorblättern für große Windenergieanlagen ist es heute üblich, in einem Bereich nahe der Blattwurzel aerodynamische Profile mit dicken Hinterkanten einzusetzen. Auch die aerodynamische Leistungsfähigkeit derartiger Profile weist ihre Vorzüge auf, insbesondere einen höheren Auftriebsbeiwert, eine größere Steigung der Auftriebskurve und eine geringere Empfindlichkeit des Auftriebsbeiwerts gegenüber Verschmutzungen der Profilnasenkante, jeweils betrachtet im Vergleich zu einem Profil mit dünner Hinterkante und gleicher Profildicke.

Bekannte Nachteile von Profilen mit einer dicken Hinterkante sind jedoch ein höherer Strömungswiderstand und eine stärkere Geräuschentwicklung.

Aus der Druckschrift DE 103 47 802 B3 ist ein Rotorblatt für eine Windenergieanlage bekannt geworden, bei dem von der Saugseite ein im Wesentlichen in Strömungsrichtung ausgerichtetes, flächiges Element absteht. Das flächige Element soll einer von der Blattwurzel zur Blattspitze verlaufenden Querströmung entgegenwirken.

Aus der Druckschrift KR 20100079522 A ist ein Windenergieanlagenrotorblatt bekannt geworden, bei dem einer Radialströmung der Luft entlang einer Oberfläche des Rotorblatts entgegengewirkt werden soll. Das bekannte Rotorblatt weist einen Blattwurzelabschnitt mit rundem Querschnitt und einen sich daran anschließenden Blattspitzenabschnitt auf. Um die Radialströmung zu verhindern, ist auf der Druckseite zwischen dem Blattwurzelabschnitt und dem Blattspitzenabschnitt eine Trennwand angeordnet.

Aus der Druckschrift DE 10 2008 007 908 A1 ist ein Windenergieanlagenrotorblatt mit einer Rotorflügelabströmkantenanordnung bekannt geworden. Um den Hinterkantenlärm zu reduzieren, wird die dünne Hinterkante auf unterschiedliche Weise aufgelöst, beispielsweise unter Verwendung dreieckig ausgebildeter Zähne oder von Borsten.

Druckschrift WO 2011/068405 A1 beschreibt ein Windenergieanlagenrotorblatt mit einstellbarer Blattfläche. Das aerodynamische Profil des bekannten Rotorblatts wird gebildet von einem nasenkantenseitigen Träger und einer Vielzahl von Klappen, die sich von dem nasenkantenseitigen Träger nach hinten erstrecken und um eine Achse drehbar sind, die etwa in Strömungsrichtung angeordnet ist.

Druckschrift EP 2 169 216 A2 beschreibt ein Windenergieanlagenrotorblatt mit einer speziell ausgestalteten Hinterkante. Diese weist eine zweifach gekrümmte Vertiefung aus.

Aus der Druckschrift US 2011/0211954 A1 ist ein Windenergieanlagenrotorblatt bekannt geworden, das eine dicke Profilhinterkante aufweist. Zur Erhöhung des Auftriebs ist an der Druckseite eine Auftriebsvorrichtung angebracht.

Davon ausgehend ist es die Aufgabe der Erfindung, die aerodynamischen Eigenschaften eines Windenergieanlagenrotorblatts mit einer dicken Profilhinterkante zu verbessern.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat eine Längsachse, eine Blattwurzel, eine Blattspitze, eine Druckseite, eine Saugseite und ein aerodynamisches Profil, das in einem Längsabschnitt des Rotorblatts eine Profilsehne und eine dicke Profilhinterkante aufweist.

Bei der Erfindung weist das Windenergieanlagenrotorblatt eine Vielzahl von Strömungsablenkungselementen auf, die an der dicken Profilhinterkante angeordnet sind und jeweils eine Anströmfläche aufweisen. Die Anströmfläche ist so geformt und angeordnet, dass eine in Richtung von der Blattwurzel zur Blattspitze hin verlaufende Radialströmung von der Anströmfläche in Richtung der Profilsehne umgelenkt wird.

Die Blattwurzel wird mit einer Rotornabe verbunden und kann hierzu insbesondere einen Flansch aufweisen und/oder mit Aufnahmen für geeignete Befestigungsmittel versehen sein. Der Längsabschnitt, in dem das aerodynamische Profil mit der dicken Profilhinterkante ausgebildet ist, kann sich über eine Länge von beispielsweise 10 % oder mehr oder 20 % oder mehr der Gesamtlänge des Rotorblatts erstrecken. Der Längsabschnitt kann nahe der Blattwurzel angeordnet sein, insbesondere zwischen Blattwurzel und der Mitte des Rotorblatts. Die dicke Profilhinterkante kann eine Höhe von beispielsweise 10 mm oder mehr, 50 mm oder mehr, 100 mm oder mehr oder sogar 200 mm oder mehr aufweisen. Die Profilsehne verläuft von einer Profilnasenkante bis zu einem Mittelpunkt der dicken Profilhinterkante. Die dicke Profilhinterkante ist in der Regel senkrecht zur Profilsehne ausgerichtet. Im Bereich der dicken Profilhinterkante weist das Windenergieanlagenrotorblatt eine gegebenenfalls gekrümmte hintere Fläche auf. Die Krümmung dieser Fläche kann insbesondere durch die über die Länge des Rotorblatts variierende Profiltiefe bedingt sein. In Richtung der Profilhöhe verläuft die hintere Fläche hingegen in der Regel geradlinig.

Soweit jetzt und im Folgenden Angaben zur relativen Orientierung eines Elements bezogen auf eine Fläche gemacht werden, gelten diese auch für gekrümmte Flächen, wobei die Richtung der gekrümmten Fläche an einem sich aus dem Zusammenhang ergebenden Aufpunkt betrachtet wird. Der Aufpunkt kann beispielsweise derjenige Punkt sein, in dem das betrachtete Element die Fläche berührt.

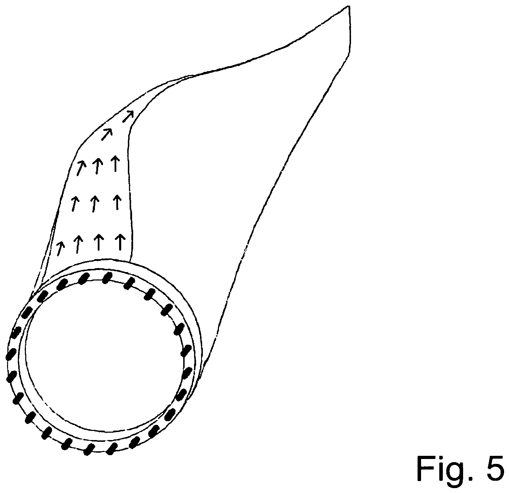

Die Erfindung beruht auf der Erkenntnis, dass der relativ hohe Strömungswiderstand von Windenergieanlagenrotorblättern mit einer dicken Hinterkante zumindest teilweise durch eine Strömung im Bereich der flächig ausgebildeten dicken Hinterkante hervorgerufen wird, nämlich einer Strömung in Radialrichtung, das heißt von der Blattwurzel ausgehend in Richtung zur Blattspitze hin verlaufend. Diese Radialströmung verringert den statischen Druck hinter dem Rotorblatt, woraus sich ein erhöhter Strömungswiderstand ergibt. Die bei bekannten Rotorblättern mit dicker Profilhinterkante auftretende Radialströmung wird anhand der Fig. 5, die ein solches Rotorblatt in einer perspektivischen Ansicht zeigt, kurz erläutert. In der Fig. 5 vorn erkennt man eine kreisförmige Blattwurzel mit einer Vielzahl von Befestigungsbolzen zur Verbindung mit einer Rotornabe. Die Blattspitze des Rotorblatts befindet sich in der Fig. 5 oben rechts. Deutlich erkennbar ist die sich von der Blattwurzel in Richtung zur Blattspitze hin erstreckende, flächige, dicke Profilhinterkante. Die dort auftretende Radialströmung ist durch mehrere kurze Pfeile veranschaulicht.

Durch die bei der Erfindung vorgesehenen Strömungsablenkungselemente an der dicken Profilhinterkante wird der unerwünschten Radialströmung entgegengewirkt. Anders als bei den eingangs im Zusammenhang mit dem Stand der Technik erläuterten Rotorblättern sind die Strömungsablenkungselemente nicht auf der Saugseite, sondern im Bereich der dicken Profilhinterkante angeordnet. Dadurch können sie dem erhöhten Strömungswiderstand optimal entgegenwirken, ohne die sonstigen aerodynamischen Eigenschaften des Rotorblatts maßgeblich zu beeinträchtigen. Außerdem wird bei der Erfindung die Radialströmung mithilfe der Anströmflächen der Strömungsablenkungselemente gezielt in Richtung der Profilsehne umgelenkt. Die zunächst in Radialrichtung entlang der dicken Hinterkante strömende Luft wird also von den Anströmflächen in einem Winkel von beispielsweise annähernd 90° umgelenkt, so dass sie von der Profilhinterkante nach hinten, in Richtung der Profilsehne, abströmt und sich mit der über Druck- und Saugseite verlaufenden Luftströmungen vereinen kann. Dadurch wird ein glattes Abströmen an der Profilhinterkante begünstigt. Insgesamt wird die aerodynamische Leistungsfähigkeit des Rotorblatts verbessert, wobei insbesondere der Quotient aus Auftrieb und Strömungswiderstand vergrößert werden kann.

In einer Ausgestaltung ist die Anströmfläche konkav gekrümmt. Dadurch kann eine auftretende Radialströmung besonders effektiv in Richtung zur Profilsehne hin umgelenkt werden, nämlich indem die Strömung an der gekrümmten Anströmfläche entlang geführt wird. Dabei kann ein kontinuierliches Umlenken der Strömung erfolgen.

In einer Ausgestaltung erstrecken sich die Strömungsablenkungselemente über die gesamte Höhe der Profilhinterkante. Dies kann alternativ oder zusätzlich auch für die zugehörigen Anströmflächen gelten, deren Höhe der Höhe der Strömungsablenkungselemente entsprechen kann. Durch so bemessene Strömungsablenkungselemente und/oder Anströmflächen kann die gesamte, an der Profilhinterkante auftretende Radialströmung erfasst werden.

In einer Ausgestaltung weisen die Strömungsablenkungselemente auf ihrer zur Blattspitze weisenden, der Anströmfläche gegenüberliegenden Seite eine ebene Fläche auf, die in Richtung der Profilsehne angeordnet ist. Dadurch können unerwünschte Einflüsse der Strömungsablenkungselemente auf die entlang der Druck- und Saugseite abströmende Luft minimiert werden.

Bei der Erfindung weist die Anströmfläche einen ersten Abschnitt auf, der in Richtung einer Fläche der Profilhinterkante angeordnet ist. Mit anderen Worten ist der erste Abschnitt parallel zu der flächigen Profilhinterkante angeordnet. Er verläuft somit annähernd im rechten Winkel zur Profilsehne. Eine entlang der Profilhinterkante in Richtung zur Blattspitze hin strömende Radialströmung wird daher ohne Weiteres am ersten Abschnitt der Anströmfläche entlang strömen und nachfolgend von weiteren Abschnitten der Abströmfläche in der gewünschten Weise in Richtung der Profilsehne abgelenkt werden.

Bei der Erfindung schließt sich der erste Abschnitt der Anströmfläche glatt an die Fläche der Profilhinterkante an. Dadurch werden unerwünschte Verwirbelungen der Radialströmung vor der Ablenkung durch die Anströmfläche vermieden, insbesondere im Bereich von Stufen oder Kanten oder plötzlichen Richtungsänderungen.

In einer Ausgestaltung weist die Anströmfläche einen zweiten Abschnitt auf, der im rechten Winkel zur Längsachse des Rotorblatts angeordnet ist. Eine Flächennormale auf den zweiten Abschnitt verläuft in Richtung der Längsachse. Durch diese Ausrichtung des zweiten Abschnitts der Anströmfläche wird sichergestellt, dass die abströmende Luft, die zuvor den zweiten Abschnitt der Anströmfläche passiert hat, näherungsweise in Richtung der Profilsehne abströmt. In Strömungsrichtung betrachtet kann der zweite Abschnitt der Anströmfläche das hintere Ende der Anströmfläche bilden.

In einer Ausgestaltung weist die Anströmfläche einen zweiten Abschnitt auf, der im rechten Winkel zur Fläche der Profilhinterkante angeordnet ist. Eine Normale auf den zweiten Abschnitt der Anströmfläche verläuft also nicht unbedingt parallel zur Längsachse des Rotorblatts, sondern in einem Winkel dazu geneigt, entsprechend dem Winkel zwischen der flächigen Profilhinterkante und der Längsachse. Durch diese Ausgestaltung wird die über den zweiten Abschnitt der Anströmfläche abströmende Luft unter Umständen etwas stärker oder etwas weniger stark umgelenkt, als für ein Abströmen in Richtung der Profilsehne wünschenswert erscheint. Im Zusammenwirken mit den über Druck- und Saugseite verlaufenden Strömungen kann sich dennoch eine optimale Wirkung einstellen.

In einer Ausgestaltung schließen sich an den zweiten Abschnitt Ränder an, die sich von gegenüberliegenden Seiten des zweiten Abschnitts in Richtung zur Blattwurzel hin erstrecken. Betrachtet man einen Querschnitt durch den zweiten Abschnitt und die Ränder in einer Schnittebene, die senkrecht zur Profilsehne angeordnet ist, können der zweite Abschnitt und die beiden sich anschließenden Ränder insbesondere U-förmig ausgebildet sein, mit mehr oder weniger stark abgerundeten Ecken. Die Ränder können auch relativ zu dem zweiten Abschnitt geneigt angeordnet sein, beispielsweise in einem Winkel zwischen 90° und 120°. Die am zweiten Abschnitt der Anströmfläche angeordneten Ränder wirken einer seitlichen Umströmung der Anströmfläche im Bereich des zweiten Abschnitts entgegen und tragen so dazu bei, dass die Radialströmung in der gewünschten Weise in Richtung der Profilsehne umgelenkt wird.

In einer Ausgestaltung weist die Anströmfläche des Strömungsablenkungselements zwischen dem ersten Abschnitt und dem zweiten Abschnitt einen konkav gekrümmten, mittleren Abschnitt auf. Die Strömung kann dann entlang der ersten und zweiten Abschnitte, die in Strömungsrichtung geradlinig ausgebildet sein können, geradlinig an- bzw. abströmen und vorwiegend im Bereich des mittleren Abschnitts umgelenkt werden.

In einer Ausgestaltung ist die Höhe der Anströmfläche und/oder des Strömungsablenkungselements über die Länge des Strömungsablenkungselements in Richtung der Profilsehne konstant. Mit der Höhe des Strömungsablenkungselements bzw. der Anströmfläche ist die Höhe in Richtung der Profilhöhe gemeint, also senkrecht zur Profilsehne und senkrecht zur Längsachse des Rotorblatts. Der mittlere Abschnitt kann einen Viertelkreis beschreiben. Bei dieser Ausgestaltung erstreckt sich das Strömungsablenkungselement bzw. die Anströmfläche ausgehend von der Profilhinterkante mit gleichmäßiger Höhe. Dies hat sich als aerodynamisch vorteilhaft erwiesen.

In einer Ausgestaltung sind die Strömungsablenkungselemente in einem Abstand im Bereich von 1 m bis 4 m voneinander angeordnet. Beispielsweise können entlang eines 15 m langen Längsabschnitts, in dem ein Windenergieanlagenrotorblatt eine dicke Profilhinterkante aufweist, 3 bis 15 Strömungsablenkungselemente angeordnet sein. Der Abstand zwischen zwei Strömungsablenkungselementen kann über den Längsabschnitt gleichmäßig sein oder variieren. Insbesondere kann der Abstand in Abhängigkeit von der Höhe der Profilhinterkante variiert werden, sodass bei besonders großen Profilhinterkanten, nahe der Blattwurzel, größere Abstände zwischen zwei Strömungsablenkungselementen vorhanden sind, als im Bereich geringerer Höhen der Profilhinterkante, weiter zur Blattspitze hin.

In einer Ausgestaltung beträgt die Tiefe der Strömungsablenkungselemente das 0,5-fache bis 1,5-fache ihrer Höhe. Diese Ausgestaltung hat sich als aerodynamisch vorteilhaft erwiesen. Bevorzugt liegt die Tiefe der Strömungsablenkungselemente im Bereich des 0,6-fachen bis 1,2-fachen ihrer Höhe.

In einer Ausgestaltung sind die Strömungsablenkungselemente aus einem Kunststoffmaterial gefertigt. Sie können gemeinsam mit dem Windenergieanlagenrotorblatt hergestellt oder vorgefertigt und nachträglich mit dem Rotorblatt verbunden werden. Das Kunststoffmaterial kann insbesondere ein faserverstärktes Kunststoffmaterial sein, wie es auch für Rotorblatthalbschalen verwendet wird.

Die Erfindung wird nachfolgend anhand von in Figuren dargestellten Ausführungsbeispielen näher erläutert. Es zeigen:
- Fig. 1: ein erfindungsgemäßes Windenergieanlagenrotorblatt in einer Draufsicht auf die Saugseite,
- Fig. 2: einen Querschnitt durch das Windenergieanlagenrotorblatt der Fig. 1 an der mit A-A bezeichneten Position,
- Fig. 3: ein Strömungsablenkungselement in einer perspektivischen Darstellung,
- Fig. 4: ein weiteres Strömungsablenkungselement, ebenfalls in einer perspektivischen Darstellung,
- Fig. 5: ein herkömmliches Windenergieanlagenrotorblatt mit einer dicken Profilhinterkante.

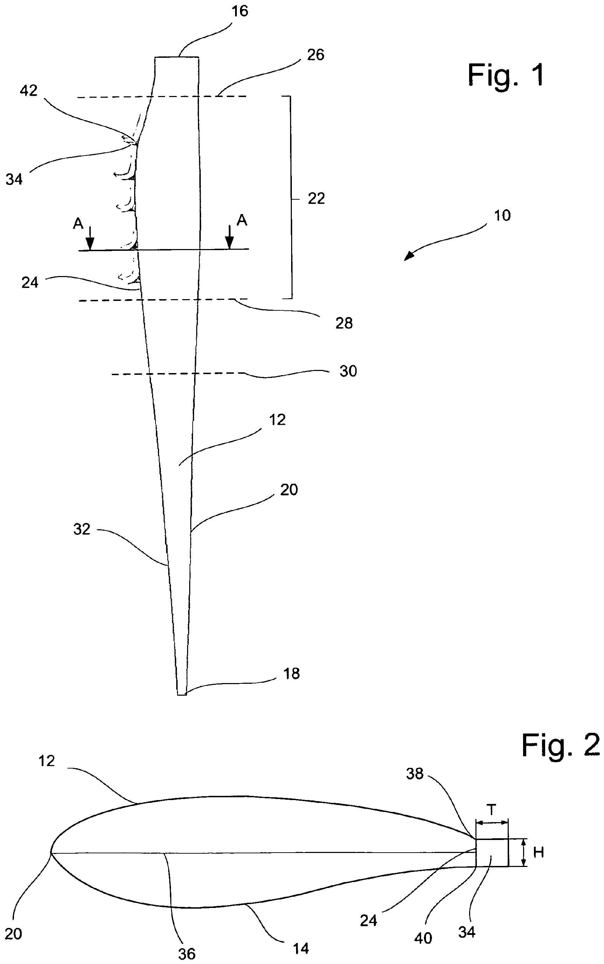

Fig. 1 zeigt ein erfindungsgemäßes Windenergieanlagenrotorblatt 10 in einer Draufsicht auf die Saugseite 12. Die Druckseite des Rotorblatts 10 befindet sich auf der vom Betrachter abgewandten Seite. Das Rotorblatt 10 hat außerdem eine Blattwurzel 16 und eine Blattspitze 18 sowie eine Profilnasenkante 20. Im Bereich der Blattwurzel 16 ist das Rotorblatt 10 im Querschnitt kreisförmig und zum Anschluss an eine Rotornabe vorgesehen.

In einem Längsabschnitt 22 weist das Rotorblatt 10 eine dicke Profilhinterkante 24 auf. Der Längsabschnitt 22 erstreckt sich von einer ersten Längsposition 26 bis zu einer zweiten Längsposition 28. Die erste Längsposition 26 ist nahe der Blattwurzel 16, jedoch in einem Abstand davon, angeordnet. Die zweite Längsposition 28 ist weiter zur Blattspitze hin angeordnet als die erste Längsposition 26, jedoch von der Blattwurzel 16 aus betrachtet noch vor der Mitte 30 des Rotorblatts 10. Zwischen der zweiten Längsposition 28 und der Blattspitze 18 weist das Rotorblatt 10 eine dünne Profilhinterkante 32 auf.

Innerhalb des Längsabschnitts 22 weist das Rotorblatt 10 eine Vielzahl von Strömungsablenkungselementen 34 auf. Jedes Strömungsablenkungselement 34 weist eine Anströmfläche 42 auf, die eine von der Blattwurzel 16 zur Blattspitze 18 hin verlaufende Radialströmung in Richtung der Profilsehne 36 (siehe Fig. 2) umlenkt, wie durch die gekrümmten Pfeile nahe jedes Strömungsablenkungselements 34 veranschaulicht. Die Profilsehne 36 ist in Fig. 1 nicht eingezeichnet. Sie verläuft in jedem Profil geradlinig von der Profilnasenkante 20 zur Profilhinterkante, im Falle einer dicken Profilhinterkante 24 zur Mitte dieser dicken Profilhinterkante 24. Dies ist in der Fig. 2 beispielhaft für den Querschnitt an der mit A-A bezeichneten Längsposition des Windenergieanlagenrotorblatts 10 aus Fig. 1 dargestellt.

In der Fig. 2 trägt die Profilsehne das Bezugszeichen 36. Die Profilsehne 36 verläuft von der Profilnasenkante 20 bis zur Mitte der dicken Profilhinterkante 24. Ebenfalls dargestellt sind die Saugseite 12 des Profils, die konvex gekrümmt von der Profilnasenkante 20 bis zu einem hinteren Endpunkt 38 der Saugseite 12 verläuft, und die Druckseite 14, die ebenfalls an der Profilnasenkante 20 beginnt und von dort mit zunächst konvexer, dann konkaver Krümmung bis zum hinteren Endpunkt 40 der Druckseite 14 führt. Die Endpunkte 38, 40 sind durch die dicke Profilhinterkante 24 miteinander verbunden. Unmittelbar an der dicken Profilhinterkante 24 ist ein Strömungsablenkungselement 34 angeordnet. Man erkennt die Höhe H des Strömungsablenkungselements 34, die der Höhe der dicken Profilhinterkante gleicht, und die Tiefe T des Strömungsablenkungselements 34, welche die Höhe H um einen Faktor von etwa 1,2 übersteigt.

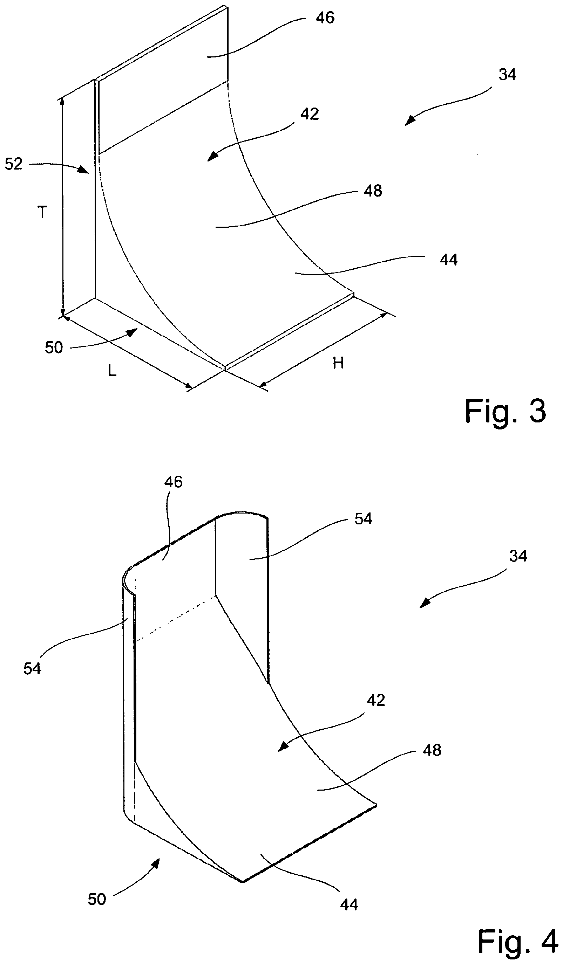

In der Fig. 3 ist eines der Strömungsablenkungselemente 34 aus den Fig. 1 und 2 in einer perspektivischen Ansicht dargestellt. Der Blick ist auf die Anströmfläche 42 gerichtet, die konkav gekrümmt ausgebildet ist. Die Anströmfläche 42 weist einen ersten Abschnitt 44 und einen zweiten Abschnitt 46 auf. Zwischen dem ersten Abschnitt 44 und dem zweiten Abschnitt 46 ist ein konkav gekrümmter, mittlerer Abschnitt 48 angeordnet, der mit gleichmäßiger Krümmung vom ersten Abschnitt 44 zum zweiten Abschnitt 46 führt. Die in der Fig. 3 vom Betrachter abgewandte, untere Seite 50 des Strömungsablenkungselements 34 weist eine Höhe H und eine Länge L auf und wird mit der dicken Profilhinterkante 24 verklebt. Die in der Fig. 3 ebenfalls vom Betrachter abgewandte, hintere Seite 52 weist eine Höhe H und eine Länge, die der Tiefe T des Strömungsablenkungselements entspricht, auf und weist in Richtung der Blattspitze 18. Die hintere Seite 52 ist von einer ebenen Fläche gebildet, deren Flächennormale parallel zur Längsachse des Rotorblatts 10 ausgerichtet ist. Dieselbe Ausrichtung hat auch der zweite Abschnitt 46, sodass die von ihm abströmende Luft in Richtung der Profilsehne 36 abströmt. Der erste Abschnitt 44 der Anströmfläche 42 ist hingegen parallel zur Fläche der dicken Profilhinterkante 24 angeordnet.

Die Fig. 4 zeigt ein weiteres Ausführungsbeispiel eines Strömungsablenkungselements 34. Für sich entsprechende Komponenten werden dieselben Bezugszeichen verwendet wie in Verbindung mit dem ersten Ausführungsbeispiel. Das Strömungsablenkungselement 34 weist ebenfalls eine Anströmfläche 42 mit einem ersten Abschnitt 44 und einem zweiten Abschnitt 46 auf, die entsprechend dem Ausführungsbeispiel der Fig. 3 angeordnet sind. Im Unterschied zur Fig. 3 erstrecken sich von gegenüberliegenden Seiten des zweiten Abschnitts 46 jedoch gekrümmte Ränder 54 in Richtung zur Blattwurzel hin. In einem Querschnitt durch das Strömungsablenkungselement 34 auf Höhe des zweiten Abschnitts 46 und in einer Ebene parallel zur Fläche der unteren Seite 50 und der Fläche der dicken Profilhinterkante 24 bildet der zweite Abschnitt 46 der Anströmfläche 42 gemeinsam mit den beiden Rändern 54 ein U.

### Liste der verwendeten Bezugszeichen:

- 10: Windenergieanlagenrotorblatt
- 12: Saugseite
- 14: Druckseite
- 16: Blattwurzel
- 18: Blattspitze
- 20: Profilnasenkante
- 22: Längsabschnitt
- 24: dicke Profilhinterkante
- 26: erste Längsposition
- 28: zweite Längsposition
- 30: Mitte
- 32: dünne Profilhinterkante
- 34: Strömungsablenkungselement
- 36: Profilsehne
- 38: hinterer Endpunkt der Saugseite
- 40: hinterer Endpunkt der Druckseite
- 42: Anströmfläche
- 44: erster Abschnitt
- 46: zweiter Abschnitt
- 48: mittlerer Abschnitt
- 50: untere Seite
- 52: hintere Seite
- 54: Rand

## Patentansprüche

1. Windenergieanlagenrotorblatt (10) mit einer Längsachse, einer Blattwurzel (16), einer Blattspitze (18), einer Druckseite (14), einer Saugseite (12) und einem aerodynamischen Profil, das in einem Längsabschnitt (22) des Rotorblatts (10) eine Profilsehne (36) und eine dicke Profilhinterkante (24) aufweist, **gekennzeichnet durch** eine Vielzahl von Strömungsablenkungselementen (34), die an der dicken Profilhinterkante (24) angeordnet sind und jeweils eine Anströmfläche (42) aufweisen, die so geformt und angeordnet ist, dass eine entlang der dicken Profilhinterkante (24) in Richtung von der Blattwurzel (16) zur Blattspitze (18) hin verlaufende Radialströmung von der Anströmfläche (42) in Richtung der Profilsehne (36) umgelenkt wird, wobei die Anströmfläche (42) einen ersten Abschnitt (44) aufweist, der in Richtung einer Fläche der dicken Profilhinterkante (24) angeordnet ist und sich glatt an die Fläche der dicken Profilhinterkante (24) anschließt.

2. Windenergieanlagenrotorblatt (10) nach Anspruch 1, **dadurch gekennzeichnet, dass** die Anströmfläche (42) konkav gekrümmt ist.

3. Windenergieanlagenrotorblatt (10) nach Anspruch 1 oder 2, **dadurch gekennzeichnet, dass** sich die Strömungsablenkungselemente (34) über die gesamte Höhe der dicken Profilhinterkante (24) erstrecken.

4. Windenergieanlagenrotorblatt (10) nach einem der Ansprüche 1 bis 3, **dadurch gekennzeichnet, dass** die Strömungsablenkungselemente (34) auf ihrer zur Blattspitze (18) weisenden, der Anströmfläche (42) gegenüberliegenden Seite eine ebene Fläche aufweisen, die in Richtung der Profilsehne (36) angeordnet ist.

5. Windenergieanlagenrotorblatt (10) nach einem der Ansprüche 1 bis 4, **dadurch gekennzeichnet, dass** die Anströmfläche (42) einen zweiten Abschnitt (46) aufweist, der im rechten Winkel zur Längsachse des Rotorblatts (10) angeordnet ist.

6. Windenergieanlagenrotorblatt (10) nach Anspruch 1 bis 4, **dadurch gekennzeichnet, dass** die Anströmfläche (42) einen zweiten Abschnitt (46) aufweist, der im rechten Winkel zur Fläche der dicken Profilhinterkante (24) angeordnet ist.

7. Windenergieanlagenrotorblatt (10) nach Anspruch 5 oder 6, **dadurch gekennzeichnet, dass** sich an den zweiten Abschnitt (46) Ränder (54) anschließen, die sich von gegenüberliegenden Seiten des zweiten Abschnitts (46) in Richtung zur Blattwurzel (16) hin erstrecken.

8. Windenergieanlagenrotorblatt (10) nach einem der Ansprüche 5 bis 7, **dadurch gekennzeichnet, dass** die Anströmfläche (42) zwischen dem ersten Abschnitt (44) und dem zweiten Abschnitt (46) einen konkav gekrümmten, mittleren Abschnitt (48) aufweist.

9. Windenergieanlagenrotorblatt (10) nach einem der Ansprüche 1 bis 8, **dadurch gekennzeichnet, dass** die Höhe H der Anströmfläche (42) und/oder des Strömungsablenkungselements (34) über die Länge des Strömungablenkungselements (34) in Richtung der Profilsehne (36) konstant ist.

10. Windenergieanlagenrotorblatt (10) nach einem der Ansprüche 1 bis 9, **dadurch gekennzeichnet, dass** die Strömungsablenkungslemente (34) in einem Abstand im Bereich von 1 m bis 4 m voneinander angeordnet sind.

11. Windenergieanlagenrotorblatt (10) nach einem der Ansprüche 1 bis 10, **dadurch gekennzeichnet, dass** die Tiefe T der Strömungsablenkungselemente (34) das 0,5-fache bis 1,5-fache ihrer Höhe H beträgt.

12. Windenergieanlagenrotorblatt (10) nach einem der Ansprüche 1 bis 11, **dadurch gekennzeichnet, dass** die Strömungsablenkungselemente (34) aus einem Kunststoffmaterial gefertigt sind.

## Claims

1. A wind turbine rotor blade (10) having a longitudinal axis, a blade root (16), a blade tip (18), a pressure side (14), a suction side (12) and an aerodynamic profile which, in a longitudinal section (22) of the rotor blade (10), has a profile chord (36) and a thick trailing edge (24), **characterized by** a multiplicity of flow deflection elements (34) which are arranged on the thick trailing edge (24) each having a respective inflow area (42) which is shaped and arranged such that a radial flow running in the direction from the blade root (16) toward the blade tip (18) is diverted by the inflow area (42) in the direction of the profile chord (36), wherein the inflow area (42) has a first section (44) which is arranged in the direction of a surface of the thick trailing edge (24) and adjoins the surface of the thick trailing edge (24) with a smooth transition.

2. The wind turbine rotor blade (10) according to claim 1, **characterized in that** the inflow area (42) is concavely curved.

3. The wind turbine rotor blade (10) according to claim 1 or 2, **characterized in that** the flow deflection elements (34) extend over the entire height of the thick trailing edge (24).

4. The wind turbine rotor blade (10) according to one of the claims 1 to 3, **characterized in that** the flow deflection elements (34) have, on their side which points toward the blade tip (18) and which is situated opposite the inflow area (42), a planar surface which is arranged in the direction of the profile chord (36).

5. The wind turbine rotor blade (10) according to one of the claims 1 to 4, **characterized in that** the inflow area (42) has a respective second section (46) which is arranged at right angles to the longitudinal axis of the rotor blade (10).

6. The wind turbine rotor blade (10) according to claims 1 to 4, **characterized in that** the inflow area (42) has a respective second section (46) which is arranged at right angles to the surface of the thick trailing edge (24).

7. The wind turbine rotor blade (10) according to claim 5 or 6, **characterized in that** the second section (46) is adjoined by edges (54) which extend from opposite sides of the second section (46) in the direction of the blade root (16).

8. The wind turbine rotor blade (10) according to one of the claims 5 to 7, **characterized in that** the inflow area (42) has, between the respective first section (44) and the respective second section (46), a respective concavely curved middle section (48).

9. The wind turbine rotor blade (10) according to one of the claims 1 to 8, **characterized in that** the height H of the respective inflow area (42) and/or of the flow deflection elements (34) are constant over the corresponding lengths of the flow deflection elements (34) in the direction of the profile chord (36).

10. The wind turbine rotor blade (10) according to one of the claims 1 to 9, **characterized in that** the flow deflection elements (34) are arranged with a spacing to one another in the range of 1 m to 4 m.

11. The wind turbine rotor blade (10) according to one of the claims 1 to 10, **characterized in that** the depth T of the flow deflection elements (34) is 0.5 times to 1.5 times their height H.

12. The wind turbine rotor blade (10) according to one of the claims 1 to 11, **characterized in that** the flow deflection elements (34) are made of a plastics material.

## Revendications

1. Pale de rotor d'éolienne (10) avec un axe longitudinal, une base de pale (16), une pointe de pale (18), un côté pression (14), un côté aspiration (12) et un profil aérodynamique présentant une corde de profil (36) et un bord de fuite de profil épais (24) dans une section longitudinale (22) de la pale de rotor (10), **caractérisée par** une pluralité d'éléments de déviation de flux (34) agencés sur le bord de fuite de profil épais (24) et présentant respectivement une surface d'afflux (42) formée et agencée de telle façon qu'un flux radial évoluant le long du bord de fuite de profil épais (24), de la base de pale (16) à la pointe de pale (18), est déviée à partir de la surface d'afflux (42) vers la corde de profil (36), la surface d'afflux (42) présentant une première section (44) agencée dans la direction d'une surface du bord de fuite de profil épais (24) et raccordée en affleurement avec la surface du bord de fuite de profil épais (24).

2. Pale de rotor d'éolienne (10) selon la revendication 1, **caractérisée en ce que** la surface d'afflux (42) est courbée de façon concave.

3. Pale de rotor d'éolienne (10) selon la revendication 1 ou 2, **caractérisée en ce que** les éléments de déviation de flux (34) s'étendent sur toute la hauteur du bord de fuite de profil épais (24).

4. Pale de rotor d'éolienne (10) selon l'une des revendications 1 à 3, **caractérisée en ce que** sur leur côté tourné vers la pointe de pale (18) et opposé à la surface d'afflux (42), les éléments de déviation de flux (34) présentent une surface plane agencée dans la direction de la corde de profil (36).

5. Pale de rotor d'éolienne (10) selon l'une des revendications 1 à 4, **caractérisée en ce que** la surface d'afflux (42) présente une deuxième section (46) agencée en angle droit par rapport à l'axe longitudinal de la pale de rotor (10).

6. Pale de rotor d'éolienne (10) selon l'une des revendications 1 à 4, **caractérisée en ce que** la surface d'afflux (42) présente une deuxième section (46) agencée en angle droit par rapport à la surface du bord de fuite de profil épais (24).

7. Pale de rotor d'éolienne (10) selon la revendication 5 ou 6, **caractérisée en ce que** des rebords (54) s'étendant à partir des côtés opposés de la deuxième section (46) en direction de la base de pale (16) prolongent la deuxième section (46).

8. Pale de rotor d'éolienne (10) selon l'une des revendications 5 à 7, **caractérisée en ce que** la surface d'afflux (42) présente une section centrale (48) courbée de façon concave entre la première section (44) et la deuxième section (46).

9. Pale de rotor d'éolienne (10) selon l'une des revendications 1 à 8, **caractérisée en ce que** la hauteur H de la surface d'afflux (42) et/ou de l'élément de déviation de flux (34) est constante sur la longueur de l'élément de déviation de flux (34), en direction de la corde de profil (36).

10. Pale de rotor d'éolienne (10) selon l'une des revendications 1 à 9, **caractérisée en ce que** les éléments de déviation de flux (34) sont agencés de manière à présenter un espacement compris entre 1 m et 4 m entre eux.

11. Pale de rotor d'éolienne (10) selon l'une des revendications 1 à 10, **caractérisée en ce que** la profondeur T des éléments de déviation de flux (34) mesure entre 0,5 fois et 1,5 fois leur hauteur H.

12. Pale de rotor d'éolienne (10) selon l'une des revendications 1 à 11, **caractérisée en ce que** les éléments de déviation de flux (34) sont fabriqués en une matière plastique.
